(19)

Europäisches
Patentamt
European
Patent Office
Office européen
des brevets

(11) **EP 2 104 222 A1**

(12) **EUROPEAN PATENT APPLICATION**

(43) Date of publication:
  23.09.2009 Bulletin 2009/39

(51) Int Cl.:
  *H02P 6/08* (2006.01)  *H02P 25/02* (2006.01)
  *H02P 27/08* (2006.01)

(21) Application number: 08153129.5

(22) Date of filing: 20.03.2008

(84) Designated Contracting States:
  AT BE BG CH CY CZ DE DK EE ES FI FR GB GR
  HR HU IE IS IT LI LT LU LV MC MT NL NO PL PT
  RO SE SI SK TR
  Designated Extension States:
  AL BA MK RS

(71) Applicant: Electrolux Home Products Corporation
  N.V.
  1930 Zaventem (BE)

(72) Inventors:
  • **Marson, Enrico**
    **33080, AZZANO DECIMO (IT)**
  • **Boscariol, Enrico**
    **31016, CORDIGNANO (IT)**

(74) Representative: **Jorio, Paolo et al**
  **Studio Torta S.r.l.**
  **Via Viotti 9**
  **10121 Torino (IT)**

(54) **Method and device for controlling a brushless AC motor**

(57)    A method of controlling a brushless AC motor (3), wherein two power lines (7) supply a direct voltage and direct current (Vdc)(Idc) to a power circuit (8) which supplies the motor (3) with three stator currents (Ia, Ib, Ic), the method providing for sampling the supply voltage and current (Vdc) along one line (7) to reconstruct a vector ($I\alpha((k),I\beta(k)$) relative to the stator current; determining a vector ($FluxR\alpha(k),FluxR\beta(k)$) relative to the rotating rotor flux; calculating the scalar product of the two vectors ($FluxR\alpha(k),FluxR\beta(k)$ and $I\alpha$, $I\beta$) to determine a quadrature error (RT) between the two vectors; determining a compensation angle (φcomp) and/or a compensation voltage (Vcomp) capable of eliminating the quadrature error (RT); and varying a regulating angle (φreg) and/or a regulating voltage modulus (Vreg) for supply to the motor (3), as a function of the compensation angle (φcomp) and/or the compensation voltage (Vcomp) respectively.

Fig. 3

**Description**

The present invention relates to a method and device for controlling a brushless AC motor.

As is known, devices for controlling brushless AC motors, i.e. so-called permanent-magnet rotor motors, substantially comprise an inverter, which comprises a power circuit defined by six transistors arranged in pairs on three circuit branches connected to the three phases of the brushless AC motor, and a control device that instantaneously controls the six transistors to supply the three currents to the motor to generate a rotating magnetic field.

Some control devices of the above type are known as "sensorless actuating devices", meaning they are able to control the power transistors with no direct measurement of the position of the rotating magnetic field of the rotor, i.e. with no sensor for measuring the instantaneous position of the rotor, which, as is known, is essential for controlling a brushless AC motor.

Control by sensorless actuating devices substantially comprises measuring the three current supplies to the motor directly, and accordingly reconstructing the rotating magnetic field of the rotor. To do this, some currently used solutions employ three current-measuring devices comprising three shunts, each of which is located along a circuit branch to indicate instantaneous current flow along the branch and so permit a vector reconstruction of the stator current, by which to make a vector reconstruction of the magnetic field of the rotor.

To reduce the cost of such actuating devices, it has been proposed to use only one current-measuring device indicating the instantaneous total flow of the three currents along the three circuit branches.

Though, on the one hand, simplifying the circuit as described above provides for reducing the cost of the actuating device, on the other, it fails to provide for accurate, continuous reconstruction of the three current supplies to the motor. That is, a time window exists during which the current measured by the current-measuring device only corresponds to one of the three current supplies to the motor, thus preventing the other two sinusoidal currents from being determined, and so resulting in a temporary uncertain vector condition of current supply to the motor.

To overcome for this temporary uncertainty, closed-loop regulating devices are employed which, during the uncertainty time window, impose predetermined sinusoidal current references to be followed. Use of such references by the regulating devices is unavoidable in a closed-loop control system, but, precisely on account of the circuit architecture, inevitably introduces current harmonics that increase the noise level of the motor and produce undesired torque peaks.

This phenomenon being related directly to closed-loop control of the brushless motor, no effective, low-cost solution has yet been devised to eliminate the noise of the motor caused by control-induced harmonics, which is why brushless AC motors in closed loop with a single shunt are avoided in technical fields governed by strict noise regulations, as, for example, in the manufacture of electric household appliances.

It is an object of the present invention to provide a straightforward, low-cost method of controlling a brushless AC motor, and which produces no noise-generating harmonics in the motor.

According to the present invention, there is provided a method of controlling a brushless AC motor, as claimed in Claim 1 and preferably, though not necessarily, in any one of the Claims depending directly or indirectly on Claim 1.

According to the present invention, there is also provided a device for controlling a brushless AC motor, as claimed in Claim 5 and preferably, though not necessarily, in any one of the Claims depending directly or indirectly on Claim 5.

According to the present invention, there is also provided a software product as claimed in Claim 9.

According to the present invention, there is also provided an electric household appliance as claimed in Claim 10.

A non-limiting embodiment of the present invention will be described by way of example with reference to the accompanying drawings, in which:

Figure 1 shows a schematic, partly sectioned view in perspective, with parts removed for clarity, of an electric household appliance featuring a brushless AC motor control device in accordance with the teachings of the present invention;

Figure 2 shows a schematic of the brushless AC motor control device in Figure 1;

Figure 3 shows a block diagram of the Figure 2 control device;

Figure 4 shows a block diagram of a compensating circuit of the Figure 2 control device;

Figure 5 shows an operation flow chart of the brushless AC motor control method according to the teachings of the present invention.

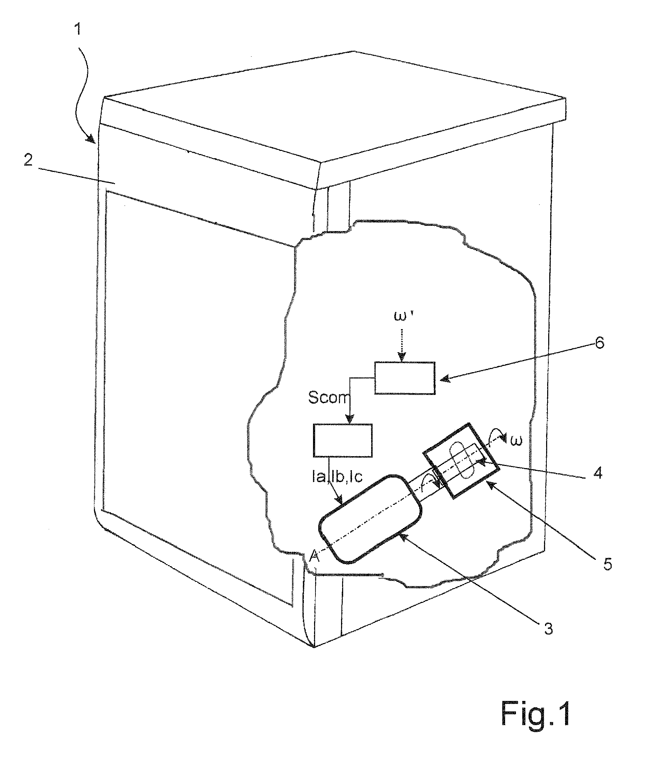

Number 1 in Figure 1 indicates as a whole an electric household appliance comprising a casing 2, in which are housed a brushless AC motor having a permanent-magnet rotor connected to and for rotating a rotating member 4 of a device 5 about an axis A; and an electronic circuit 6 for instantaneously controlling the angular speed ω of motor 3 according to a predetermined speed ω'.

In the example shown, electric household appliance 1 is a dishwasher, and device 5 is a fluid pump driven mechanically by motor 3.

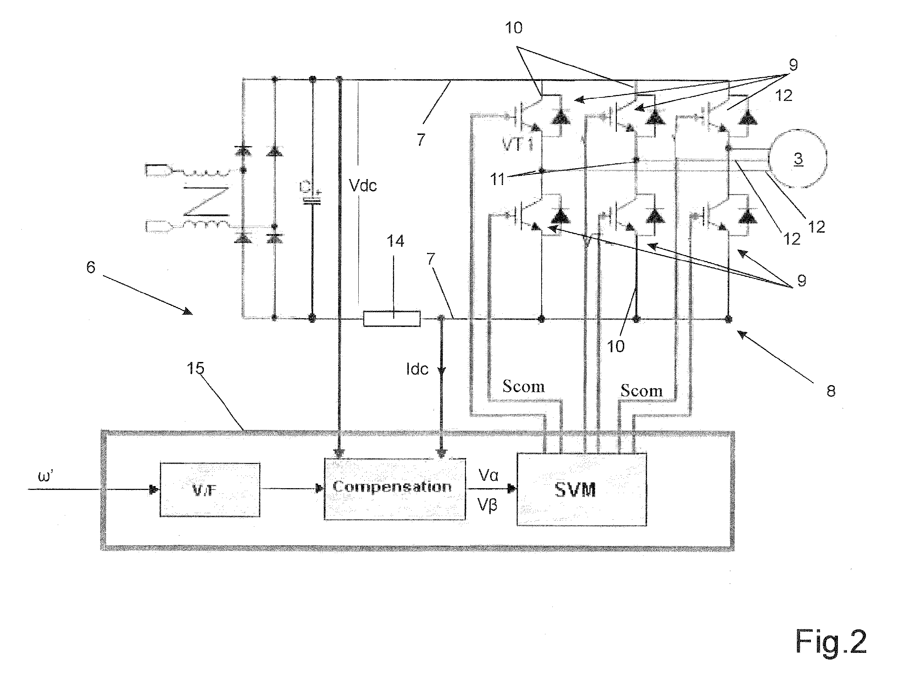

With reference to Figure 2, electronic circuit 6 comprises a first and second power line 7 at a substantially continuous supply voltage Vdc; a power circuit 8 having six transistors 9 arranged in pairs along three control circuit branches 10 connected to the first and second power line 7, and each having, between the relative pair of transistors 9, a node 11 connected to a terminal 12 of motor 3.

Electronic circuit 6 also comprises a current-measuring module 14 located along one of the two power lines 7 to instantaneously measure the supply current Idc along power line 7. In the Figure 2 example, module 14 comprises a shunt for measuring the supply current Idc along power line 7.

Electronic circuit 6 also comprises an open-loop control unit 15 which receives supply voltage Vdc, current Idc, and predetermined reference speed ω', and supplies control signals Scom for controlling transistors 9, and each comprising a given duty cycle enabling/disabling a respective transistor 9 of power circuit 8.

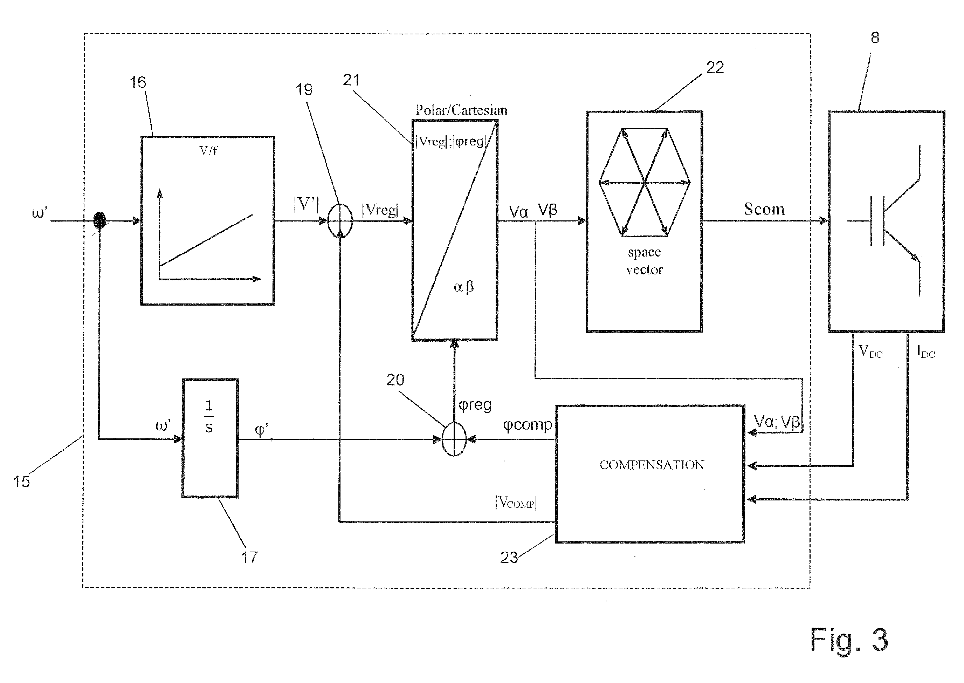

With reference to Figure 3, control unit 15 substantially comprises a speed/voltage conversion module 16 which receives predetermined reference speed ω', and supplies the modulus of the theoretical voltage V' required of motor 3 to achieve predetermined reference speed ω'. In the example shown, speed/voltage conversion module 16 determines the reference voltage V' according to the equation:

$$\texttt{V'=Vboost+Vm+Vacc=Vboost+Ke*ω'+Kacc*ω'/Tpwm}$$

where : Vboost is a predetermined voltage sufficient to start the motor; Ke is a constant associated with the characteristic electric parameters of the motor; Kacc is an acceleration constant associated with the mechanical parameters of the motor; and Tpwm is a time interval associated with PWM modulation by control circuit 8.

Control unit 15 also comprises an integrating module 17 which receives predetermined reference speed ω', and supplies a reference angle ω'. More specifically, integrating module 17 integrates predetermined reference speed ω' to determine the required angle φ' of the rotating magnetic field of the rotor of motor 3.

Control unit 15 also comprises a first adding node 19 which receives the modulus of reference voltage |V'| and the modulus of a compensation voltage |vcomp| (described in detail below), and supplies the modulus of a regulating voltage |Vreg|=|V'|+|Vcomp|; and a second adding node 20 which receives reference angle φ' and a value relative to a compensation angle φcomp (described in detail below), and supplies a regulating angle φreg= φ'+ φcomp.

Control unit 15 also comprises a conversion module 21 which receives the modulus of regulating voltage |Vreg|=|V'|+|Vcomp| and regulating angle φreg, and accordingly calculates the regulating voltage in vector form $\overline{Vr}$. Conversion module 21 also transforms vector $\overline{Vr}$ from one reference system, e.g. a polar reference system defined by a modulus and an angle, to a vector cartesian reference system αβ. More specifically, vector reference system αβ is stationary with respect to the stator, and is defined by two perpendicular axes α and β, i.e. in phase quadrature with respect to each other.

Control unit 15 also comprises a space vector modulator 22 which receives the two voltage components Vα and Vβ of the regulating voltage vector, and accordingly determines - in known manner not described in detail - the duty cycles of control signals Scom controlling transistors 9.

Control unit 15 also comprises a compensation unit 23 which receives the two voltage components Vα and Vβ, supply voltage Vdc, and supply current Idc, and supplies compensation angle φcomp and the modulus of compensation voltage Vcomp.

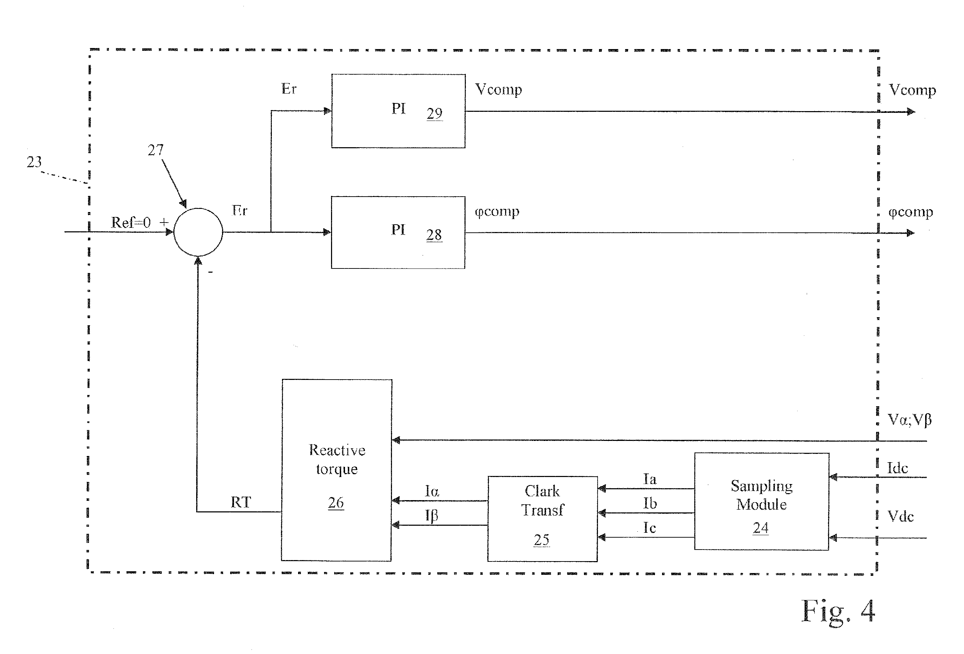

With reference to Figure 4, in the example shown, compensation unit 23 comprises a sampling module 24 which receives supply voltage Vdc and supply current Idc, and supplies the currents Ia, Ib, Ic supplied to motor 3. In the example shown, sampling module 24 samples supply voltage Vdc and supply current Idc by means of a known algorithm to determine the three stator currents Ia, Ib, Ic supplied to motor 3.

Compensation unit 23 also comprises a transformation module 25 which receives the three currents Ia, Ib, Ic, and effects a direct Clark transformation on them to supply two currents Iα, Iβ. In the example shown, the three currents Ia, Ib, Ic represent the three components of the rotating current vector I with respect to a three-phase reference system comprising three axes 120 degrees apart, and the direct Clark transformation transforms the representation of vector Ia, Ib, Ic from the above three-phase reference system to the stationary vector reference system αβ comprising two perpendicular axes α, and β, and in which current vector I is defined by two current components Iα and Iβ.

Compensation unit 23 also comprises a computing module 26 which receives currents Iα, Iβ and the two components Vα, Vβ of regulating voltage Vreg, and supplies a parameter RT hereinafter referred to as "quadrature error".

More specifically, and as explained in more detail below, quadrature error RT is a value related to the existing angular position between the space vector of stator current I and the space vector of rotor flux FluxR.

In other words, quadrature error RT is related to the difference between a real phase shift - i.e. between the current vector represented by its components Iα, Iβ, and the rotor flux vector represented by components FluxRα(k) and FluxRβ(k) - and an optimum phase shift, in which the two vectors are substantially perpendicular.

In the example shown, quadrature error RT is zero when the space vector of stator current I and the space vector of rotor flux FluxR are perpendicular - a condition corresponding to "optimum" operation of motor 3, in which the motor produces maximum torque; and is other than zero when the above perpendicular condition is not met, and which corresponds to a "delay" of the rotor flux vector with respect to the rotating stator current vector.

Compensation unit 23 also comprises an adding node 27 which receives quadrature error RT and a zero reference value REF, and supplies a regulating error Er equal to the difference between reference value REF and quadrature error RT, i.e. Er=REF-RT.

Compensation unit 23 also comprises a first regulating module 28 which receives regulating error Er, and supplies compensation angle φcomp. In the example shown, first regulating module 28 is a PI (proportional-integral) regulating block which determines compensation angle φcomp.

The compensation angle φcomp supplied by the PI regulating block therefore enables compensation unit 23 to eliminate regulating error Er and so zero the quadrature error RT between the flux and current vectors.

Compensation unit 23 also comprises a second regulating module 29 which receives regulating error Er, and supplies the modulus of compensation voltage Vcomp. In the example shown, second regulating module 29 is, for example, a P (proportional) regulating block or a PI (proportional-integral) regulating block, which determines compensation voltage Vcomp. The compensation voltage Vcomp supplied by second regulating block 29 therefore enables compensation unit 23 to eliminate regulating error Er and so zero the quadrature error RT.

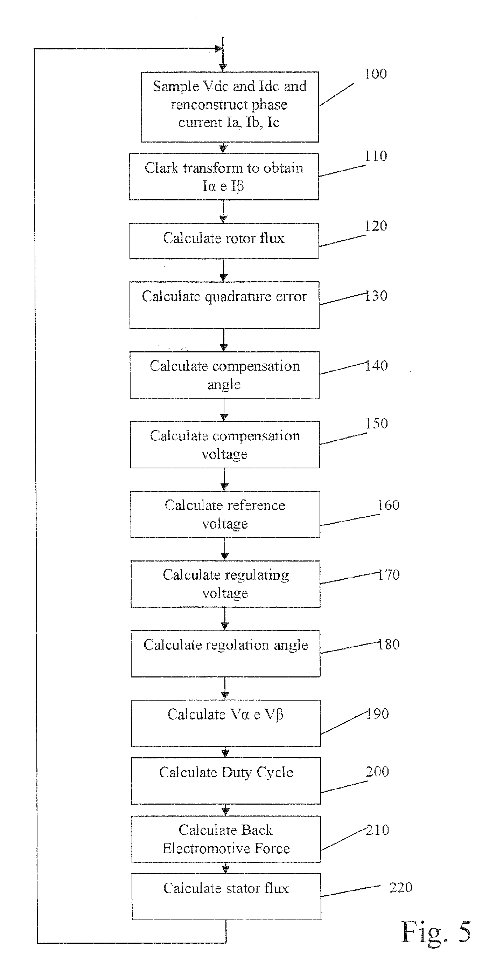

The method of controlling brushless motor 3 will now be described with reference to Figure 5. To begin with (block 100), sampling module 24 samples current Idc and voltage Vdc to determine the three currents Ia, Ib, Ic of the rotating vector of stator current Idc with respect to a three-phase reference system defined by three axis 120° apart.

Once the three stator components Ia, Ib, Ic of the vector relative to the current supplied to motor 3 are determined, transformation module 25 effects a direct Clark transformation of the three components to determine the two components Iα, Iβ in the stationary vector reference system α,β (block 110).

At this point, computing module 26 (block 120) determines the rotor flux vector FluxRα,β(k) in stationary vector reference system αβ according to the equations :

$$\text{FluxR}\alpha(k) = \text{FluxS}\alpha(k-1) - \text{LS} * I\alpha(k);$$

$$\text{FluxR}\beta(k) = \text{FluxS}\beta(k-1) - \text{LS} * I\beta(k);$$

where : FluxRα(k) and FluxRβ(k) are the two components of rotor flux vector FluxRα,β(k) at instant k in stationary vector reference system αβ; FluxSα(k-1) and FluxSβ(k-1) are the two components of stator flux vector FluxSα,β(k-1) at instant (k-1) in stationary vector reference system αβ determined as described below; and LS is a predetermined parameter relative to the inductance of the stator of motor 3.

At this point (block 130), computing module 26 determines the quadrature error RT(k) at instant k according to the equation:

$$\text{RT}(k) = \text{FluxR}\alpha(k) * I\alpha(k) + \text{FluxR}\beta(k) * I\beta(k)$$

Once quadrature error RT(k) is calculated, first regulating module 28 (block 140) determines compensation angle φcomp at instant k.

It should be pointed out that the compensation angle φcomp(k) generated by first regulating module 28 provides for compensating variations in torque caused by fluctuations in the load of motor 3 as it is running. In this condition, in fact, the rotor flux vector tends to be slowed down by the load driven by motor 3. The method therefore compensates regulating angle φreg to bring the stator current vector rapidly back into quadrature with the rotor flux vector, which condition increases the torque of the motor to achieve a fast response to the increase in load.

Simultaneously with calculation of compensation angle φcomp(k), second regulating module 29 (block 150) determines the modulus of compensation voltage Vcomp(k).

It should be pointed out that the compensation voltage Vcomp(k) calculated by second regulating module 29 substantially provides for compensating the current-flux phase shift associated with the electric parameters of motor 3.

At this point (block 160), the method calculates, by means of first adding node 19, reference voltage V'(k) at instant k according to the equation:

$$V'(k)=Vboost+Ke*\omega'(k)+Kacc*(\omega'(k)-\omega'(k-1)/Tpwm)$$

and then (block 170) determines the modulus of regulating voltage |Vreg| according to the equation: Vreg(k)=V'(k)+Vcomp(k).

Next, integrating module 17 (block 180) calculates reference angle φ'(k) at instant k, and second adding node 20 determines regulating angle φreg according to the equation: φreg(k)=φ'(k)+φcomp(k).

After calculating the modulus of regulating voltage Vreg(k) and regulating angle φreg(k) at instant k, the method determines, by means of conversion module 21 (block 190), the two regulating voltage vector components Vα(k), Vβ(k) according to the equations :

$$V\alpha(k)=\left|Vreg(k)\right|*\cos\ \varphi reg(k)$$

$$V\beta(k)=\left|Vreg(k)\right|*\cos\ \varphi reg(k)$$

At this point, the method determines, as a function of Vα(k) and Vβ(k) and by means of space vector modulator 22, the duty cycles of control signals Scom to switch transistors 9 of power circuit 8 controlling the motor (block 200).

The method also determines the two components of the back electromotive force vector Bemf(k) in stationary reference system αβ (block 210) according to the equations :

$$Bemf\alpha(k)=V\alpha(k)-Rs*I\alpha(k)$$

$$Bemf\beta(k)=V\beta(k)-Rs*I\beta(k)$$

At this point, the method determines the stator flux vector FluxSα,β(k) at instant k in stationary vector reference system αβ (block 220) according to the equations :

$$FluxS\alpha(k)=LPF(Bemf\alpha(k))$$

$$FluxS\beta(k)=LPF(Bemf\beta(k))$$

where LPF is a predetermined low-pass filter.

After calculating stator flux vector FluxSα,β(k), the method repeats the above operations performed in blocks 100-220.

It should be pointed out that the method described above may be defined by a software program loadable into a memory of an electronic device, and designed to implement, when executed, the operations as shown in Figure 5.

The method described has the major advantage of controlling brushless AC motors simply and cheaply, and, by virtue of its open-loop configuration, introducing no noise-generating harmonics in the motor.

In particular, compensating the motor regulating voltage angle provides, alongside fluctuations in load, for maintaining quadrature of the rotor flux and stator current, thus ensuring fast, effective response to load-induced variations in torque, which would otherwise tend to slow down rotor flux rotation, and also advantageously keeping the motor "in step".

In addition, control by the method is particularly "robust", by ensuring correct voltage regulation regardless of the electric characteristics, i.e. parameters, of the motor. More specifically, compensating the regulating voltage modulus by tracking quadrature of the stator current and rotor flux means control of the brushless AC motor is quite insensitive of the characteristic electric parameters of the motor, thus enabling a certain amount of freedom in selection of the type of brushless AC motor employed in the appliance.

Clearly, changes may be made to the control device, method, and electric household appliance 1 as described herein without, however, departing from the scope of the present invention as defined in the accompanying Claims.

**Claims**

1. A method of controlling a brushless AC motor (3), wherein two power lines (7) supply a substantially direct supply voltage (Vdc) and a substantially direct supply current (Idc) to a power circuit (8), which comprises switching means (9) connected between said power lines (7) and said motor (3), and control means (22) for switching said switching means (9) to supply three stator currents (Ia, Ib, Ic) to said motor (3) and generate a rotating rotor magnetic field; said method comprising the steps of:

   a) establishing a reference rotation speed (ω') of said rotating rotor magnetic field;
   b) determining a regulating stator voltage (Vreg) as a function of the predetermined said reference rotation speed (ω'); said regulating stator voltage (Vreg) being defined by a corresponding regulating voltage modulus (|Vreg|) and a relative regulating angle (φreg) ;
   c) transforming said regulating stator voltage (Vreg) into a first vector (Vα, Vβ) associated with a stationary vector reference system (α,β);
   d) vector space modulating the second vector (Vα, Vβ) of said regulating stator voltage (Vreg) to determine control signals (Scom) for controlling said switching means (9);
   said method being **characterized by** comprising the steps of:
   e) sampling said supply voltage (Vdc) and said supply current (Idc) at predetermined instants (k) to reconstruct the stator currents (Ia (k), Ib (k), Ic(k)) circulating in the stator of said motor (3) at said instants (k);
   f) representing said stator currents (Ia(k), Ib(k), Ic(k)) by a second vector (Iα(k),Iβ(k)) associated with said stationary vector reference system (α,β);
   g) determining the rotating rotor flux (FluxRαβ(k)) of said motor (3) as a function of said first vector (Vα,Vβ) and said second vector (Iα(k),Iβ(k));
   h) representing said rotating rotor flux (FluxRαβ(k)) by a third vector (FluxRα(k),FluxRβ(k)) associated with said stationary vector reference system (α,β);
   i) calculating the scalar product of said third vector (FluxRα(k),FluxRβ(k)) relative to said rotating rotor flux, and said second vector (Iα,Iβ) relative to said stator current, to determine a quadrature error (RT); said quadrature error (RT) being related to the difference between the real phase shift between said second (Iα,Iβ) and said third (FluxRα(k),Fluxβ(k)) vector, and an optimum phase shift in which said second (Iα,Iβ) and said third (FluxRα(k),FluxRβ(k)) vector are substantially perpendicular;
   l) determining a compensation angle (φcomp) and/or a compensation voltage (Vcomp) capable of eliminating said quadrature error (RT);
   m) varying said regulating angle (φreg) and/or said regulating voltage modulus (Vreg) as a function of said compensation angle (φcomp) and/or said compensation voltage (Vcomp) respectively.

2. A method as claimed in Claim 1, wherein said step m) comprises the step of determining said compensation angle (φcomp) by performing a proportional-integral regulation to eliminate a regulating error (Er(k)) defined by the difference between said quadrature error (RT) and a zero reference value (REF).

3. A method as claimed in Claim 1 or 2, wherein said step m) comprises the step of determining said compensation voltage (Vcomp) by performing a proportional-integral regulation to eliminate a regulating error (Er(k)) defined by the difference between said quadrature error (RT) and a zero reference value (REF).

4. A method as claimed in any one of the foregoing Claims, wherein said quadrature error is determined according to the equation:

$$RT(k) = FluxR\alpha(k) * I\alpha(k) + FluxR\beta(k) * I\beta(k)$$

**5.** A device (15) for controlling a brushless AC motor (3), connected to two power lines (7) supplying a substantially direct supply voltage (Vdc) and a substantially direct supply current (Idc); said device having a power circuit (8), which comprises switching means (9) connected between said power lines (7) and said motor (3), and control means (22) for switching said switching means (9) to supply three stator currents (Ia, Ib, Ic) to said motor (3) and generate a rotating rotor magnetic field; said device comprising :

- first computing means (16, 17, 19) which receive a reference rotation speed (ω') of said rotating rotor magnetic field, and determine a regulating stator voltage (Vreg) as a function of said reference rotation speed (ω'); said regulating stator voltage (Vreg) being defined by a regulating voltage modulus (|Vreg|) and a regulating angle (φreg);
- first converting means (21) transforming said regulating stator voltage (Vreg) into a first vector (Vα,Vβ) associated with a stationary vector reference system (α,β);
- modulating means (22) which vector space modulate the first vector (Vα,Vβ) of said regulating stator voltage (Vreg) to determine control signals (Scom) for controlling said switching means (9);
said device being **characterized by** comprising :
- sampling means (24) which sample said supply voltage (Vdc(k)) and said supply current (Idc(k)) at predetermined instants (k) to reconstruct the stator currents (Ia(k), Ib(k), Ic(k)) circulating in the stator of said motor (3) at said instants (k);
- second converting means (25) which represent said stator currents (Ia(k), Ib(k), Ic(k)) by a second vector (Iα(k),Iβ(k)) associated with said stationary vector reference system (α,β);
- second computing means (26) which determine the rotating rotor flux (FluxRαβ(k)) of said motor (3) as a function of said first vector (Vα,Vβ) and said second vector (Iα(k),Iβ(k)); said second computing means (26) also representing said rotating rotor flux (FluxRαβ(k)) by a third vector (FluxRα(k),FluxRβ(k)) associated with said stationary vector reference system (α,β), and calculating the scalar product of said third vector (FluxRα(k),FluxRβ(k)) relative to said rotating rotor flux, and said second vector (Iα,Iβ) relative to said stator current, to determine a quadrature error (RT); said quadrature error (RT) being related to the difference between the real phase shift between said second (Iα,Iβ) and said third (FluxRα(k),Fluxβ(k)) vector, and an optimum phase shift in which said second (Iα,Iβ) and said third (FluxRα(k),FluxRβ(k)) vector are substantially perpendicular;
- compensating means (28) (29) which determine a compensation angle (φcomp) and/or a compensation voltage (Vcomp) capable of eliminating said quadrature error (RT);
said first computing means (16, 17, 19) varying said regulating angle (φreg) and/or said regulating voltage modulus (Vreg) as a function of said compensation angle (φcomp) and/or said compensation voltage (Vcomp) respectively.

**6.** A device as claimed in Claim 5, wherein said compensating means (28) comprise a proportional-integral regulator (28) which receives a regulating error (Er(k)) defined by the difference between said quadrature error (RT) and a zero reference value (REF), and supplies said compensation angle (φcomp).

**7.** A device as claimed in Claim 5 or 6, wherein said compensating means (29) comprise a proportional-integral regulator (29) which receives a regulating error (Er(k)) defined by the difference between said quadrature error (RT) and a zero reference value (REF), and supplies said compensation voltage (Vcomp).

**8.** A device as claimed in any one of Claims 5 to 7, wherein said second computing means (26) determine the quadrature error (RT) according to the equation:

$$RT(k) = FluxR\alpha(k) * I\alpha(k) + FluxR\beta(k) * I\beta(k)$$

**9.** A software product loadable into a memory of electronic means (15) and designed to implement, when executed, the method as claimed in any one of Claims 1 to 4.

**10.** An electric household appliance (1) comprising a brushless AC motor (3) connected to rotating means to rotate them about a predetermined axis; said electric household appliance being **characterized by** comprising a device for controlling said brushless AC motor (3) and as claimed in any one of Claims 5 to 8.

ω'

Scom

Ia,Ib,Ic

ω

A

Fig.1

Fig.2

EP 2 104 222 A1

Fig. 3

EP 2 104 222 A1

Fig. 4

Fig. 5

EP 2 104 222 A1

| | Europäisches Patentamt European Patent Office Office européen des brevets | | EUROPEAN SEARCH REPORT | | Application Number EP 08 15 3129 |
|---|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2005 086869 A (YASKAWA ELECTRIC CORP) 31 March 2005 (2005-03-31) * paragraphs [0003], [0004], [0006], [0008] - [0010]; figures 1-4 * ----- | 1-10 | INV. H02P6/08 H02P25/02 H02P27/08 |
| A | JP 03 207296 A (TOKYO SHIBAURA ELECTRIC CO) 10 September 1991 (1991-09-10) * abstract; figures 3,4 * ----- | 1-10 | |
| A | EP 1 542 351 A (MATSUSHITA ELECTRIC IND CO LTD [JP]) 15 June 2005 (2005-06-15) * paragraphs [0014] - [0039]; figures 1-5 * ----- | 1-10 | |
| A | JP 2003 125594 A (FUJI ELECTRIC CO LTD) 25 April 2003 (2003-04-25) * abstract; figures 1-8 * ----- | 1-10 | |
| A | WO 2007/063766 A (YASKAWA DENKI SEISAKUSHO KK [JP]; INAZUMI MASANOBU [JP]) 7 June 2007 (2007-06-07) * abstract; figures 1-6 * ----- | 1-10 | TECHNICAL FIELDS SEARCHED (IPC) H02P |
| A | EP 1 406 375 A (MATSUSHITA ELECTRIC IND CO LTD [JP]) 7 April 2004 (2004-04-07) * paragraphs [0019] - [0039]; figure 1 * ----- | 1-10 | |

The present search report has been drawn up for all claims

| Place of search | Date of completion of the search | Examiner |
|---|---|---|
| The Hague | 10 October 2008 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

EP 2 104 222 A1

**ANNEX TO THE EUROPEAN SEARCH REPORT
ON EUROPEAN PATENT APPLICATION NO.**                EP 08 15 3129

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2008

| Patent document cited in search report | | | Publication date | Patent family member(s) | | Publication date |
|---|---|---|---|---|---|---|
| JP 2005086869 | A | | 31-03-2005 | NONE | | |
| JP 3207296 | A | | 10-09-1991 | NONE | | |
| EP 1542351 | A | | 15-06-2005 | CN | 1627625 A | 15-06-2005 |
| | | | | CN | 2815266 Y | 13-09-2006 |
| | | | | JP | 2005168797 A | 30-06-2005 |
| | | | | KR | 20050058191 A | 16-06-2005 |
| | | | | US | 2005127865 A1 | 16-06-2005 |
| JP 2003125594 | A | | 25-04-2003 | JP | 3894286 B2 | 14-03-2007 |
| WO 2007063766 | A | | 07-06-2007 | NONE | | |
| EP 1406375 | A | | 07-04-2004 | CN | 1492574 A | 28-04-2004 |
| | | | | JP | 3675431 B2 | 27-07-2005 |
| | | | | JP | 2004129356 A | 22-04-2004 |
| | | | | KR | 20040030327 A | 09-04-2004 |

EPO FORM P0459

For more details about this annex : see Official Journal of the European Patent Office, No. 12/82

14